# EUROPEAN PATENT APPLICATION

(11) **EP 4 046 480 A1**
(43) Date of publication of application: **24.08.2022**
(21) Application number: 20879617.7
(22) Date of filing: 25.02.2020
(51) Int. Cl.: A01K 1/01, A01K 23/00

(54) **PET DEFECATION DEVICE**

(30) Priority: 25.10.2019 KR 20190133544; 12.12.2019 KR 20190165765
(71) Applicant: PurrSong, Inc., Daejeon 34138 (KR)
(72) Inventor: NOH, Tae Gu, Suwon-si Gyeonggi-do 16422 (KR)
(74) Representative: BCKIP
(86) International application number: PCT/KR2020/002698
(87) International publication number: WO 2021/080097

(57) **Abstract**

A pet litter box includes a pad unit configured to form a defecation space; a load cell unit connected to the pad unit and configured to sense a weight applied to the defecation space; a solid material supply unit including a solid material storage unit that accommodates therein solid material to be supplied into the defecation space, a solid material feeder configured to discharge the solid material in the solid material storage unit to the defecation space and a solid material sensor configured to sense the amount of solid material accommodated in the solid material storage unit; and a controller configured to generate a solid material-shortage signal by determining whether or not there is a shortage of solid material based on results sensed by the solid material sensor and the load cell unit.

## Description

### TECHNICAL FIELD

The present disclosure relates to a pet litter box.

### BACKGROUND

As there has been a great increase in the number of households keeping pets, such as companion cats, companion dogs, etc., indoors, various related devices have been developed and released on the market.

In this regard, Korean Patent Laid-open Publication No. 10-2014-0138532 discloses a cat toilet. The cat toilet contains solid material inside a cylindrical housing having an opening and closing door for a cat to enter and exit and supports the cat to defecate inside the cylindrical housing. When excreta accumulates in a defecation space, a user grips a knob to turn the cylindrical housing, filters the excreta from the solid material with a strainer provided inside the cylindrical housing and then collects the excreta into an excreta collection container through an excreta tray.

Also, Korean Patent Laid-open Publication No. 10-2019-0092636 discloses an excreta disposal device to automatically collect excreta of cats. The excreta disposal device disclosed in the above publication contains solid material inside a housing with an open top and supports a cat to defecate inside the housing. The excreta disposal device according to the above publication determines whether or not the cat is present in a defecation space by means of a temperature sensor that measures the temperature of the defecation space and determines whether or not the cat defecates or not based on the measured temperature and thus automatically operates a collection unit and a discharge unit. The collection unit is formed on one side of the defecation space and is coupled to a rotating frame which rotates by rotation of a motor and rotates toward the front of the defecation space. Therefore, when the rotating frame is rotated, the collection unit pushes excreta clotted with the solid material in the defecation space toward the discharge unit.

The cat toilet disclosed in Korean Patent Laid-open Publication No. 10-2014-0138532 requires the user to directly intervene in a process of removing excreta, and the overall structure of the device is complicated, which results in high manufacturing costs and difficulty in maintenance. Further, the excreta disposal device disclosed in Korean Patent Laid-open Publication No. 10-2019-0092636 can automatically dispose of cat excreta accumulated in the defecation space by means of the temperature sensor provided in the defecation space. However, since the excreta disposal device has an open top, the smell of cat excreta can be released to the outside. Also, the excreta disposal device may have an error in determining various situations in the defecation space with only the temperature sensor. Further, the solid material in the defecation space need to be replenished frequently.

### DISCLOSURE OF THE INVENTION

### PROBLEMS TO BE SOLVED BY THE INVENTION

The present disclosure is conceived to provide a pet litter box configured to generate and provide a signal for a user to easily replenish a defecation space with solid material.

The present disclosure is also conceived to provide a pet litter box configured to figure out a situation where solid material is insufficient at a plurality of positions and deal with the situation.

The problems to be solved by the present disclosure are not limited to the above-described problems. There may be other problems to be solved by the present disclosure.

### MEANS FOR SOLVING THE PROBLEMS

According to an aspect of the present disclosure, a pet litter box includes a pad unit configured to form a defecation space; a load cell unit connected to the pad unit and configured to sense a weight applied to the defecation space; a solid material supply unit including a solid material storage unit that accommodates therein solid material to be supplied into the defecation space, a solid material feeder configured to discharge the solid material in the solid material storage unit to the defecation space and a solid material sensor configured to sense the amount of solid material accommodated in the solid material storage unit; and a controller configured to generate a solid material-shortage signal by determining whether or not there is a shortage of solid material based on results sensed by the solid material sensor and the load cell unit.

According to the present disclosure, the solid material sensor includes a weight sensor configured to sense a weight applied to the solid material storage unit.

According to the present disclosure, the solid material sensor includes a level sensor provided at a predetermined position of the solid material storage unit and configured to sense whether or not the predetermined position is covered with the solid material.

According to the present disclosure, the solid material sensor includes a level sensor configured to sense the height of the solid material accommodated in the solid material storage unit.

According to the present disclosure, the controller is configured to generate the solid material-shortage signal when the amount of change in weight between the start and the end of an operation of the solid material feeder sensed by the load cell unit is equal to or smaller than a predetermined value.

According to the present disclosure, the solid material-shortage signal generated by the controller includes a first shortage signal generated based on a result sensed by the solid material sensor; and a second shortage signal generated based on a result sensed by the load cell unit.

According to the present disclosure, the solid material-shortage signal generated by the controller further includes an abnormal signal generated when the first shortage signal is not generated and the second shortage signal is generated.

According to the present disclosure, the pet litter box further includes a communication unit configured to transmit the solid material-shortage signal from the controller to a server or a device.

According to the present disclosure, the pet litter box further includes an output unit configured to output the solid material-shortage signal from the controller.

### EFFECTS OF THE INVENTION

According to the pet litter box of the present disclosure, a solid material-shortage signal is generated by a solid material storage unit and a load cell unit, and, thus, whether or not there is a shortage of solid material in the pet litter box can be determined at a plurality of locations. Therefore, it is possible to accurately and precisely figure out a situation where solid material is insufficient.

Also, according to the present disclosure, since the solid material-shortage signal can be subdivided and provided to a user, the user can easily maintain and manage the pet litter box of the present disclosure. That is, the user can figure out the required amount of solid material before directly checking the solid material storage unit or a pad unit. Therefore, the user can determine whether to urgently respond to the current situation and can quickly and conveniently replenish solid material.

### BRIEF DESCRIPTION OF THE DRAWINGS

**FIG. 1** and **FIG. 2** are diagrams showing a pet litter box according to an embodiment of the present disclosure.
**FIG. 3** is a side cross-sectional view of the pet litter box according to an embodiment of the present disclosure.
**FIG. 4** is a diagram illustrating a collection unit shown in **FIG. 2****.**
**FIG. 5** is a diagram showing an end portion of a sweeper shown in **FIG. 4****.**
**FIG. 6** is a diagram showing another example of an end portion of the sweeper shown in **FIG. 4****.**
**FIG. 7** is a diagram illustrating a solid material supply unit shown in **FIG. 2****.**
**FIG. 8** is a side cross-sectional view of a solid material feeder shown in **FIG. 7****.**
**FIG. 9** is a diagram showing electrical connection among the components of the pet litter box according to an embodiment of the present disclosure.
**FIG. 10****,** **FIG. 11** and **FIG. 12** are flow charts explaining an operation of the solid material feeder by means of a load cell unit and a controller according to an embodiment of the present disclosure.
**FIG. 13** and **FIG. 14** are enlarged views illustrating a solid material storage unit shown in **FIG. 3****.**
**FIG. 15** is a flowchart explaining a process of sensing and notifying whether or not there is a shortage of solid material based on the components shown in **FIG. 9****.**
**FIG. 16** is a diagram explaining a scoop operation of the collection unit shown in **FIG. 2****.**
**FIG. 17** is a diagram explaining an arrange operation of the collection unit shown in **FIG. 2****.**
**FIG. 18** is a flowchart explaining a process of sensing and controlling a load applied to a sweeper based on the components shown in **FIG. 9****.**
**FIG. 19** is a diagram showing a pet litter box according to another embodiment of the present disclosure.
**FIG. 20** and **FIG. 21** are diagrams explaining a scoop operation of a collection unit according to another embodiment of the present disclosure.

### BEST MODE FOR CARRYING OUT THE INVENTION

Hereafter, example embodiments will be described in detail with reference to the accompanying drawings so that the present disclosure may be readily implemented by those skilled in the art. However, it is to be noted that the present disclosure is not limited to the example embodiments but can be embodied in various other ways. In the drawings, parts irrelevant to the description are omitted for the simplicity of explanation, and like reference numerals denote like parts through the whole document.

Through the whole document, the term "connected to" or "coupled to" that is used to designate a connection or coupling of one element to another element includes both a case that an element is "directly connected or coupled to" another element and a case that an element is "electronically connected or coupled to" another element via still another element. Further, it is to be understood that the term "comprises or includes" and/or "comprising or including" used in the document means that one or more other components, steps, operation and/or existence or addition of elements are not excluded in addition to the described components, steps, operation and/or elements unless context dictates otherwise and is not intended to preclude the possibility that one or more other features, numbers, steps, operations, components, parts, or combinations thereof may exist or may be added.

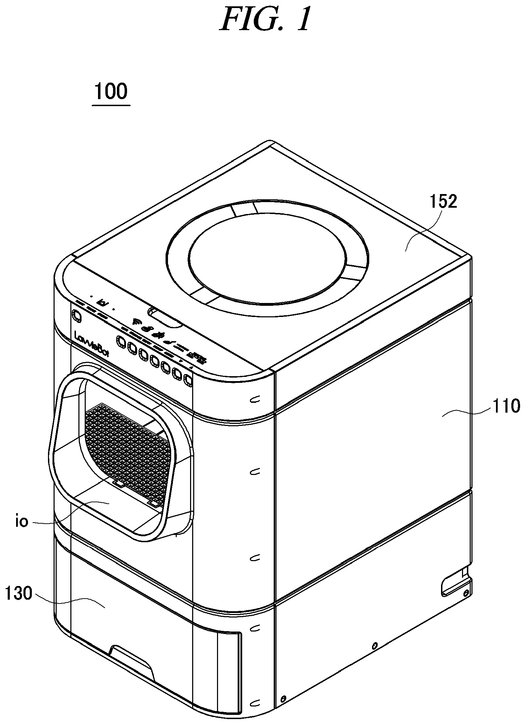

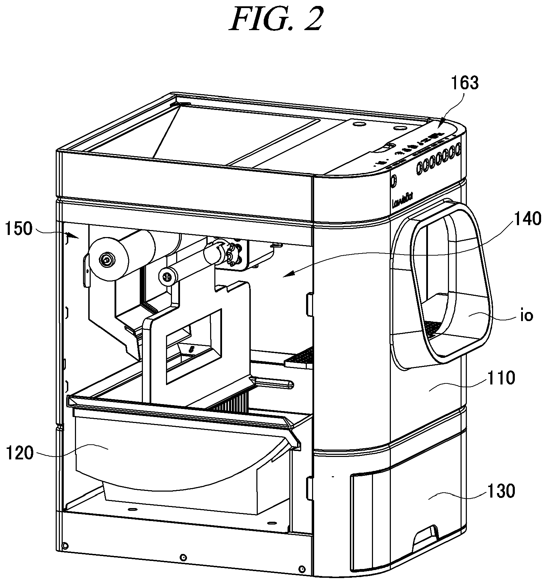

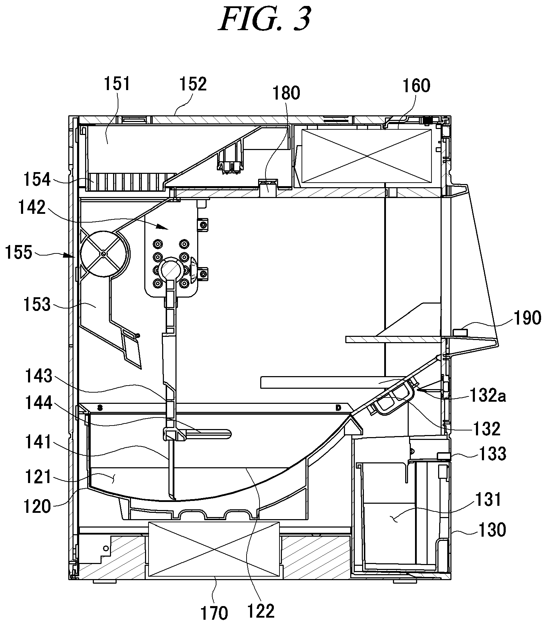

**FIG. 1** and **FIG. 2** are diagrams showing a pet litter box according to an embodiment of the present disclosure, and **FIG. 3** is a side cross-sectional view of the pet litter box according to an embodiment of the present disclosure.

As shown in **FIG. 1** to **FIG. 3**, a pet litter box 100 according to an embodiment of the present disclosure may include a case 110, a pad unit 120, a collection container 130 and a collection unit 140. The pet litter box 100 may further include a solid material supply unit 150, a controller 160, a load cell unit 170, an entry/exit sensor 180 and a reader unit 190.

As shown in **FIG. 1****,** an in/out opening io for a pet to enter and exit from an inner space of the case 110 may be formed in a front surface of the case 110, and a storage unit cover 152 to be described later may be disposed on the case 110 and the collection container 130 may be disposed below the case 110.

The pad unit 120 forming a defecation space 121 inside the case 110, the collection unit 140 treating excreta, the collection container 130 collecting the treated excreta and the solid material supply unit 150 supplying sand to the defecation space 121 provided by the pad unit 120 can be seen from **FIG. 2****.**

The pad unit 120 according to an embodiment of the present disclosure may be disposed inside the case 110 or may be configured as an open type exposed to the outside. Referring to FIG. 3, the defecation space 121 for a pet to defecate may be formed in the pad unit 120.

Also, the pad unit 120 may set a reference line 122 so that a manager can check the amount of solid material filled in the defecation space 121. The reference line 122 may be marked or corrugated to be visible to the naked eye on a surface forming the defecation space 121.

The defecation space 121 is configured to accommodate a certain amount of solid material, and the pet can defecate on the solid material. The solid material may include sand, and there are various types on the market. For example, the solid material supplied into the defecation space 121 may include one or more of bentonite, tofu sand, pellets and silica gel.

Meanwhile, referring to **FIG.** 3, whether or not the pet defecates or not can be checked by sensing a weight applied to the defecation space 121 by the load cell unit 170 formed under the pad unit 120. The load cell unit 170 may sense whether or not there is a pet in the defecation space 121 and whether or not the pet defecates through weight sensing.

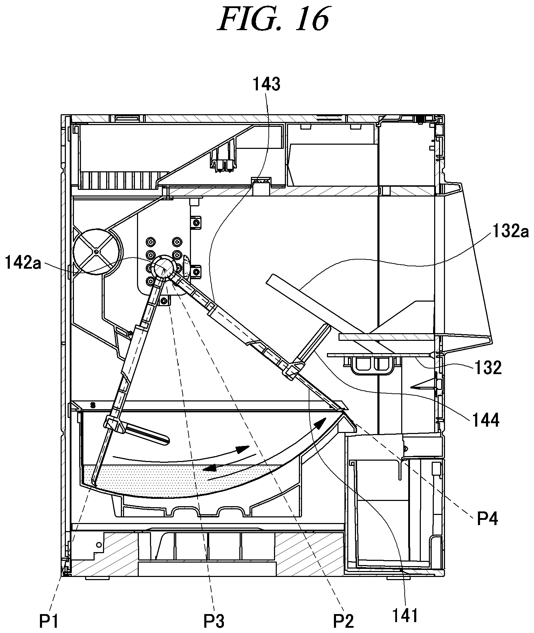

The collection container 130 according to an embodiment of the present disclosure may be located on one side of the pad unit 120 and may accommodate excreta of the pet. A collection space 131 may be formed inside the collection container 130, and a collection container cover 132, a cover protrusion 132a and a height sensor 133 may be disposed above the collection container 130. An operation of the collection container cover 132 will be described later with reference to **FIG. 16****.**

Referring to **FIG. 3****,** the height sensor 133 according to an embodiment of the present disclosure may sense the height of the excreta accommodated in the collection space 131 and may be electrically connected to the controller 160. For example, the height sensor 133 may transmit a signal to the controller 160 when the height of the excreta accommodated in the collection space 131 is sensed to be equal to or greater than a predetermined height. Thereafter, the controller 160 and an output unit 163 or communication unit 165 to be described later may notify a user that the excreta has been accommodated to the predetermined height or more in the defecation space 121 and induce the user to remove the excreta to the outside.

Desirably, the collection container 130 may be provided detachably from the front surface of the case 110 to facilitate discharge of the excreta to the outside. The user can treat the excreta of the pet by detaching the collection space 131 from the case 110.

The collection unit 140 according to an embodiment of the present disclosure may be disposed inside the case 110 and rotated in the defecation space 121 to treat the excreta of the pet accumulated in the defecation space 121.

The collection unit 140 may include a sweeper 141, a driving unit 142, a rotating unit 143 and a protruding unit 144, as shown in **FIG. 3****.** The driving unit 142 may include a sweeper rotation shaft 142a, a sweeper motor 142b and a support member 142c.

More specifically, the collection unit 140 may be disposed inside the case 110 and connected to the case 110 by the driving unit 142. The rotating unit 143 may be connected to a lower side of the driving unit 142, and the sweeper 141 may be connected to a lower side of the rotating unit 143. The protruding unit 144 may be formed at a point where the rotating unit 143 and the sweeper 141 are connected.

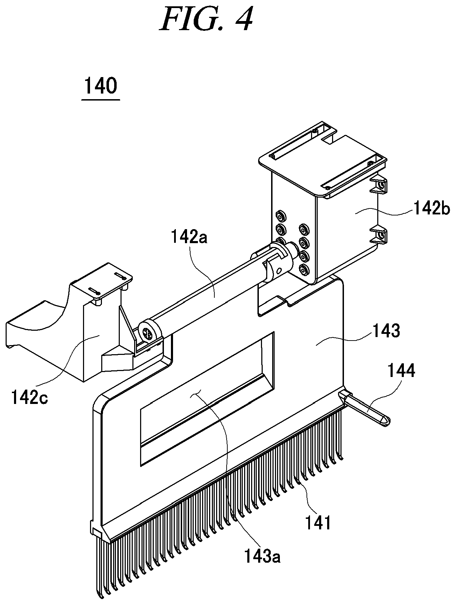

The driving unit 142 according to an embodiment of the present disclosure may generate rotational power of the collection unit 140, and the rotating unit 143 is extended to connect the driving unit 142 and the sweeper 141 to each other. The sweeper 141 may rotate the defecation space 121 by the rotational power generated by the driving unit 142. The collection unit 140 will be described in more detail with reference to **FIG. 4****.**

**FIG. 4** is a diagram illustrating the collection unit shown in **FIG. 2****.**

The sweeper 141 according to an embodiment of the present disclosure may have a rake shape and may be connected to a lower end of the rotating unit 143, as shown in **FIG. 4****.** The sweeper 141 may be rotated by driving the sweeper motor 142b connected to the rotating unit 143. The sweeper 141 may sweep and move the excreta clotted with the solid material in the defecation space 121 to the collection space 131.

Both ends of the sweeper rotation shaft 142a may be connected to the sweeper motor 142b and the support member 142c. The sweeper motor 142b and the support member 142c may be coupled to respective inner walls of the case 110 to fix the sweeper 141 inside the case 110.

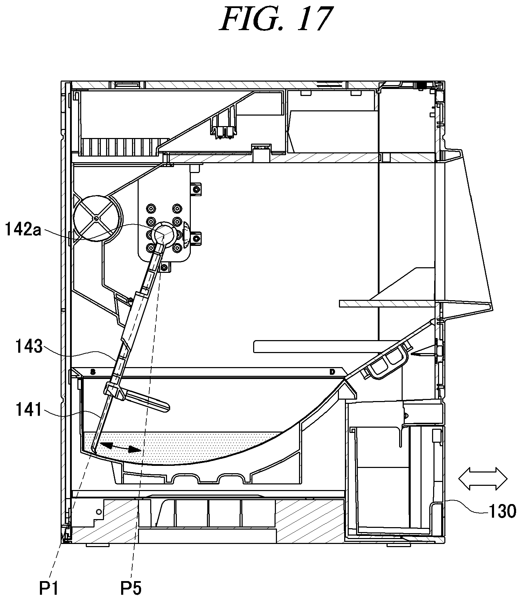

The sweeper motor 142b may rotate in response to an instruction of the controller 160 to rotate the rotating unit 143. A rotation operation of the collection unit 140 in response to an instruction of the controller 160 will be described later with reference to **FIG. 16** and **FIG. 17****.**

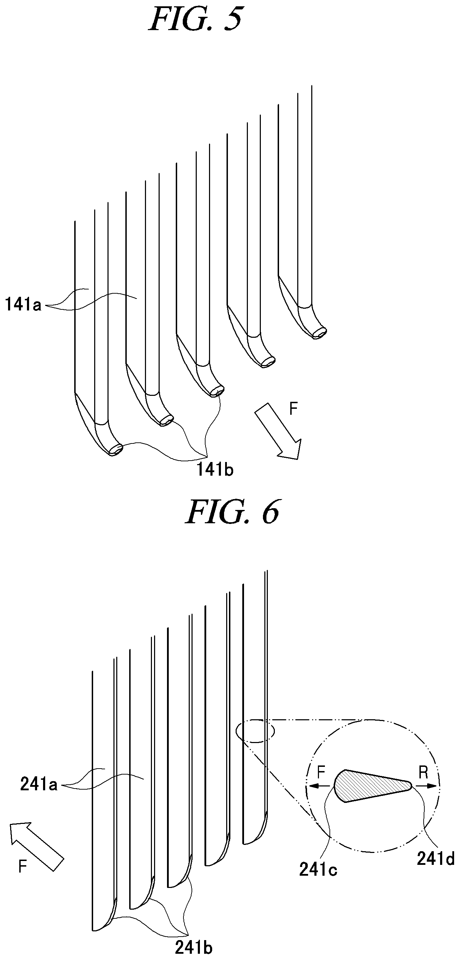

**FIG. 5** is a diagram showing an end portion of the sweeper shown in **FIG. 4****,** and **FIG. 6** is a diagram showing another example of an end portion of the sweeper shown in **FIG. 4****.**

Referring to **FIG. 5****,** the sweeper 141 according to an embodiment of the present disclosure may include a plurality of rake bodies 141a and rake ends 141b. The plurality of rake bodies 141a and rake ends 141b may be arranged side by side in a left-right direction intersecting with a front-rear direction in which the sweeper 141 moves, and may be rotated by rotation of the sweeper motor 142b to be brought into contact with excreta on the solid material and to sweep and move the excreta to the collection space 131.

The rake ends 141b according to an embodiment of the present disclosure may be formed to protrude in a positive direction F in which the sweeper 141 moves forwards, as shown in **FIG.** 5, and each may have a cross-sectional area narrowed as it protrudes forwards.

The sweeper 141 according to another embodiment of the present disclosure may include a plurality of rake bodies 241a and rake ends 241b, as shown in **FIG. 6****.** Here, each of the rake ends 241b may have a shape in which a rear surface of the rake body 241a is gradually recessed toward the end.

Referring to **FIG. 6****,** even if the rake ends 241b according to another embodiment of the present disclosure move while being in contact with a surface of the pad unit 120 when the sweeper 141 moves on the pad unit 120, the rake ends 241b may smoothly slide without deeply scratching the surface of the pad unit 120 or being caught on the surface.

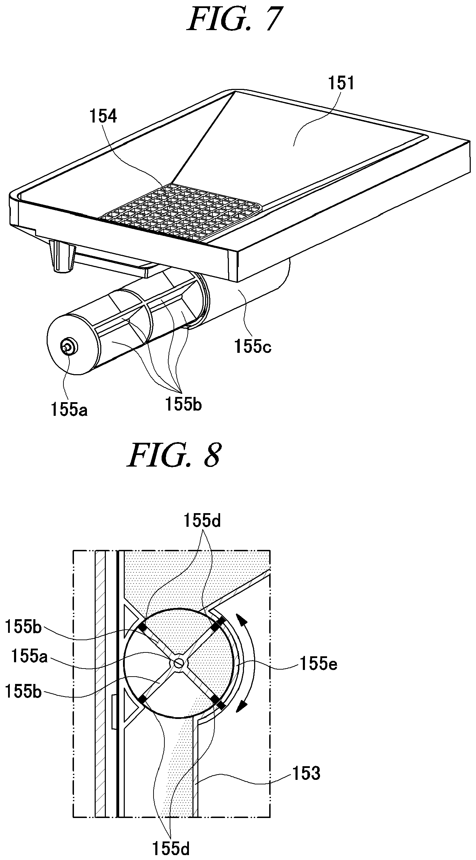

Meanwhile, **FIG. 7** is a diagram illustrating the solid material supply unit shown in **FIG. 2****,** and **FIG. 8** is a side cross-sectional view of the solid material feeder shown in **FIG. 7****.**

The solid material supply unit 150 according to an embodiment of the present disclosure may be formed at an upper rear side of the case 110, as shown in **FIG. 3****.** The solid material supply unit 150 may include a solid material storage unit 151, the storage unit cover 152, a guide passage 153, a net unit 154 and a solid material feeder 155.

The solid material storage unit 151 may be configured to accommodate the solid material supplied to the defecation space 121. The solid material storage unit 151 may be formed in a space under the storage unit cover 152 disposed at an upper end of the case 110.

As shown in **FIG. 7****,** the solid material storage unit 151 is formed to be inclined toward the guide passage 153 connected to its lower end, and, thus, the solid material stored therein may smoothly flow into the guide passage 153. Further, the storage unit cover 152 may be opened and closed by rotation manually or automatically to expose the space of the solid material storage unit 151 to the outside, and the user may replenish the solid material into the solid material storage unit 151 exposed to the outside.

The guide passage 153 may be disposed between the solid material storage unit 151 and the defecation space 121 and may guide the solid material in the solid material storage unit 151 to the defecation space 121. The guide passage 153 may extend downwards from the solid material storage unit 151 thereabove toward the defecation space 121.

The net unit 154 may be disposed within the space of the solid material storage unit 151 or between the solid material storage unit 151 and the guide passage 153. The net unit 154 may have a plurality of holes or may have a net shape. The net unit 154 allows the solid material in the solid material storage unit 151 to freely flow into the guide passage 153, but even if an object greater in size larger than the solid material is present in the solid material storage unit 151, the net unit 154 can suppress flow of the object into the guide passage 153.

Meanwhile, according to an embodiment of the present disclosure, a through portion 143a may be formed in the rotating unit 143. Accordingly, when the sweeper 141 is at a first position P1, the solid material discharged from a lower end of the guide passage 153 may pass through the through portion 143a and may be smoothly supplied to the defecation space 121.

The solid material feeder 155 according to an embodiment of the present disclosure may be provided in the guide passage 153 to adjust the amount of solid material supplied. Referring to **FIG.** 8, the solid material feeder 155 may include a feeder rotation shaft 155a, partitions 155b, a feeder driving unit 155c, a rotation sensing unit 155d and a partition housing 155e.

The feeder rotation shaft 155a may be connected to the feeder driving unit 155c and rotated by power generated by the feeder driving unit 155c, and the partitions 155b may be extended radially from the feeder rotation shaft 155a. The partitions 155b may be disposed to be spaced apart from each other by a predetermined interval, for example, 90° interval, in a circumferential direction of the feeder rotation shaft 155a. The solid material accommodated in the solid material storage unit 151 may fill between the partitions 155b.

The supply driver 155c may be operated and stopped by a signal from the controller 160 described above. When the feeder rotation shaft 155a and the partitions 155b are rotated at a predetermined angle by driving of the feeder driving unit 155c, a space between the partitions 155b may be partially opened toward a lower space of the guide passage 153. The solid material in the opened space between the partitions 155b may be discharged to the defecation space 121 through the guide passage 153.

Further, the controller 160 may adjust the amount of solid material supplied into the defecation space 121 by controlling the rotation time or rotation angle of the feeder driving unit 155c. That is, when the amount of solid material supplied into the defecation space 121 is large, the controller 160 may control the feeder driving unit 155c to rotate for a longer time or at a greater angle.

Furthermore, the rotation sensing unit 155d may sense a rotational state of the feeder driving unit 155c or the partitions 155b. Specifically, the rotation sensing unit 155d may include a magnet provided at an end of the partition 155b or at a predetermined position of the partition housing 155e accommodating the partitions 155b. The rotation sensing unit 155d counts the number of times the partitions 155b passes through the predetermined position, and, thus, the amount of solid material supplied can be checked. Also, the magnet provided in the rotation sensing unit 155d may supply a force (magnetic force) that causes the partitions 155b to stop at the predetermined position. Accordingly, the partitions 155b are rotated due to the weight of the solid material, and, thus, it is possible to suppress unintentional supply of the solid material.

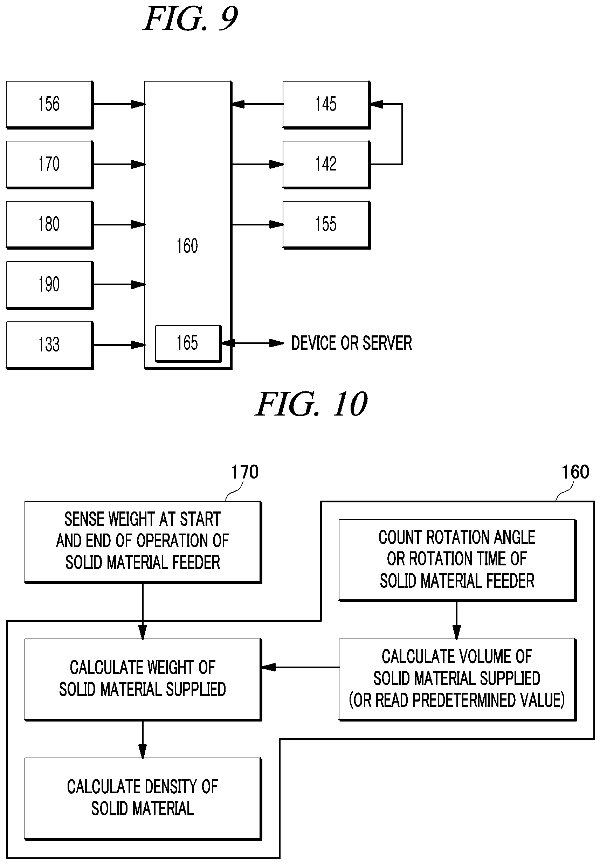

The controller 160 according to an embodiment of the present disclosure will be described with reference to **FIG. 9. FIG. 9** is a diagram showing electrical connection among the components of the pet litter box according to an embodiment of the present disclosure.

As shown in **FIG. 9****,** the controller 160 may be electrically connected to the load cell unit 170, the entry/exit sensor 180, the reader unit 190 and the height sensor 133 and may control operations of the collection unit 140 and the solid material supply unit 150 and communicate with a user device.

Referring to **FIG. 3****,** the load cell unit 170 according to an embodiment of the present disclosure may be connected to the pad unit 120 and may sense a weight applied to the defecation space 121. Also, the load cell unit 170 may sense the weight at the start and end of an operation of the solid material feeder 155.

The weight information sensed by the load cell unit 170 may be transmitted to the controller 160 and may be used in the controller 160 to control operations of the sweeper motor 142b and the solid material feeder 155. For example, when the solid material is insufficient in the defecation space 121, the solid material supply unit 150 may control the operation of the solid material feeder 155 to replenish the solid material into the defecation space 121.

Since various types of solid material is on the market and have various specific gravity values, it is difficult to figure out the amount (volume) of solid material to be replenished into the defecation space 121 only by sensing the weight of the solid material. Therefore, the controller 160 allows a certain amount (volume) of solid material to be maintained in the defecation space 121 by a method to be described later.

More specifically, the controller 160 may control the rotation angle or rotation time of the partitions 155b based on the weight of the defecation space 121 sensed by the load cell unit 170.

**FIG. 10****,** **FIG. 11** and **FIG. 12** are flow charts explaining an operation of the solid material feeder by means of a load cell unit and a controller according to an embodiment of the present disclosure.

Referring to **FIG. 10****,** the load cell unit 170 according to an embodiment of the present disclosure may sense the weight at the start and end of the operation of the solid material feeder 155. Thereafter, the controller 160 may calculate the weight of solid material supplied based on the weight at the start and end of the operation of the solid material feeder 155 sensed by the load cell unit 170. The controller 160 may calculate the density of solid material based on the volume of solid material supplied and the calculated weight of solid material supplied. More specifically, the controller 160 may calculate the volume of solid material supplied based on the rotation angle or rotation time of the partitions 155b of the solid material feeder 155.

The solid material feeder 155 is rotated according to a predetermined rotation angle and time and the corresponding volume of solid material supplied is stored, and, thus, the controller 160 can read the information. For example, when the solid material is supplied into the defecation space 121, the amount of solid material supplied may be determined depending on the number of rotations of the partitions 155b. Assuming that 1 liter of solid material is replenished when the partitions 155b is rotated 20 times, the density of solid material replenished can be measured by measuring a change in weight before and after the solid material is supplied into the defecation space 121. When the solid material is insufficient in the defecation space 121 based on the measured density, it is possible to determine the optimal amount of solid material to start replenishing the solid material.

According to an embodiment of the present disclosure, the controller 160 may generate a target weight of solid material based on the density of solid material calculated based on the weight of the defecation space 121 sensed by the load cell unit 170 and the volume of the defecation space 121. The controller 160 may determine whether or not to operate the solid material feeder 155 based on the target weight of solid material calculated based on the density of solid material and the weight sensed by the load cell unit 170.

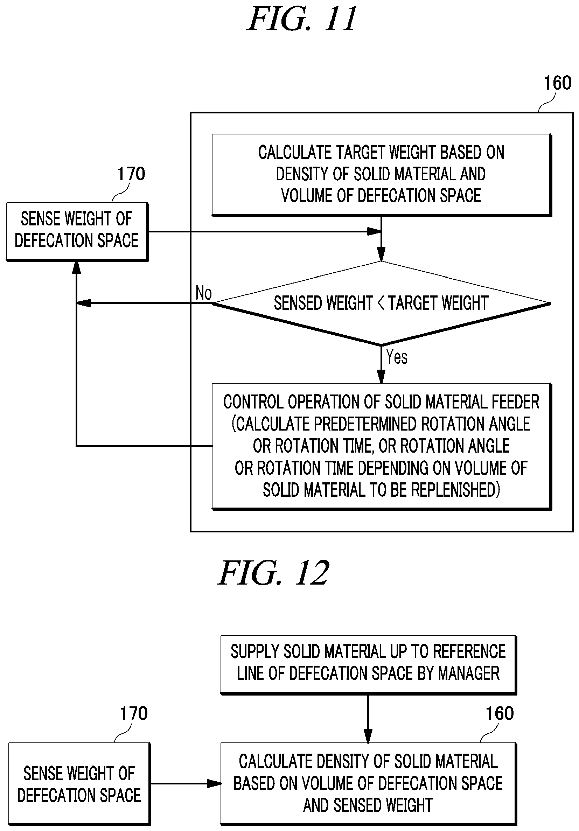

More specifically, as shown in **FIG. 11****,** the controller 160 may generate a target weight of solid material based on the calculated density of solid material and the volume of the defecation space. The controller 160 may compare the generated target weight of solid material with the weight of the defecation space 121 sensed by the load cell unit 170, and may control the operation of the solid material feeder 155 when the target weight of solid material is greater. More specifically, the controller 160 may control the operation of the solid material feeder 155 according to a predetermined rotation angle and rotation time of the solid material feeder 155. Alternatively, the controller 160 may control the operation of the solid material feeder 155 by calculating the rotation angle and the rotation time of the solid material feeder 155 based on the volume of solid material to be replenished into the defecation space 121.

The controller 160 according to an embodiment of the present disclosure may calculate the density of solid material based on the weight sensed by the load cell unit 170 at a time when a signal input from the manager is sensed. The controller 160 may determine whether or not to operate the solid material feeder 155 based on the target weight of solid material calculated based on the calculated density of solid material and the weight sensed by the load cell unit 170.

More specifically, as shown in **FIG. 12****,** the manager may supply the solid material up to the reference line 122 of the defecation space 121 directly or by pressing a button. The controller 160 may calculate the density of solid material based on the volume of the defecation space 121 and the weight sensed by the load cell unit 170. For example, the manager fills the solid material up to the reference line 122 of the pad unit 120, presses the button and measures the weight of solid material filled. The controller 160 may determine the optimal amount of solid material to be replenished into the defecation space 121 and whether or not there is an excess of solid material based on the measured weight of solid material.

The controller 160 according to an embodiment of the present disclosure may further include the communication unit 165. The communication unit 165 may receive information including the density of solid material from a server.

For example, if the manager installs an app on the device and inputs information about the solid material currently used in the defecation space 121, the information input into the app may be transmitted through the communication unit 165 to the controller 160 as the information about the solid material currently used in the defecation space 121.

The controller 160 may control the operation of the solid material feeder 155 based on the weight of the defecation space 121 sensed by the load cell unit 170 and the density of solid material received through the communication unit 165. More specifically, the controller 160 may control the rotation angle and the rotation time of the partitions 155b based on the information.

The load cell unit 170 according to an embodiment of the present disclosure may additionally sense information such as the weight of excreta of the pet, the number of times of defecation and defecation time. The information sensed by the load cell unit 170 may be transmitted to the controller 160, and the controller 160 may transmit the information to the user device. Thereafter, the user can check the information through a dedicated application installed on the user device. Therefore, the user can easily recognize various conditions depending on the defecation of the pet. The load cell unit 170 described above may be of a hydraulic type, a pneumatic type, a strain gauge type, etc., but is not necessarily limited thereto. The load cell unit 170 may be of any type as long as it is capable of sensing a weight applied to the defecation space 121 and generating weight information.

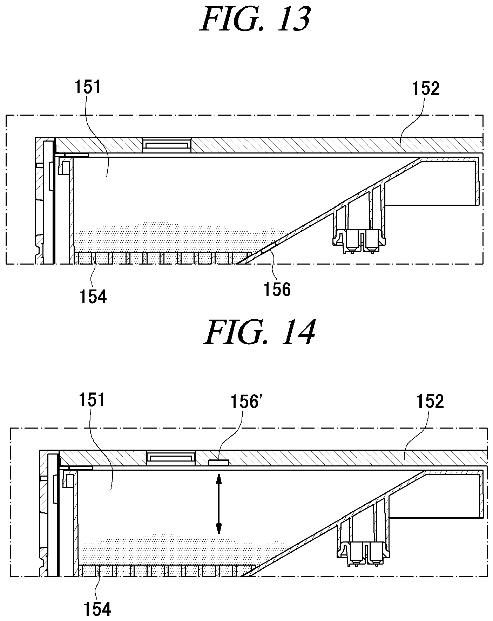

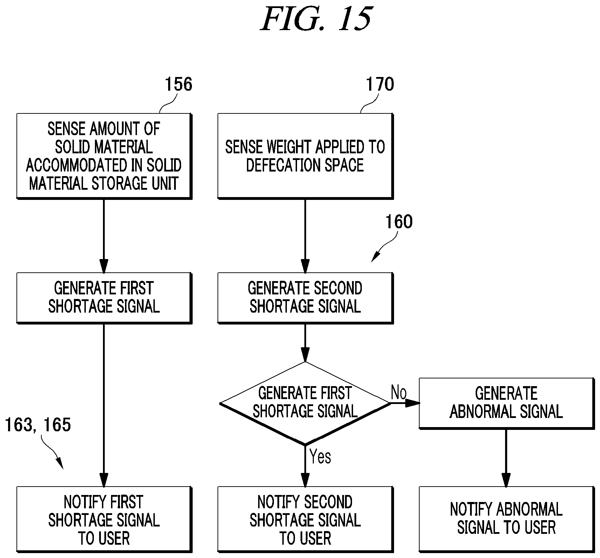

**FIG. 13** and **FIG. 14** are enlarged views illustrating the solid material storage unit shown in **FIG. 3****.** **FIG. 15** is a flowchart explaining a process of sensing and notifying whether or not there is a shortage of solid material based on the components shown in **FIG. 9****.** Hereafter, a configuration and function capable of sensing whether or not there is a shortage of solid material stored in the pet litter box of the present disclosure will be described with further reference to **FIG. 13, FIG. 14** and **FIG. 15****.**

The solid material supply unit 150 of the pet litter box 100 according to the present disclosure may further include a solid material sensor 156. The solid material sensor 156 may be configured to sense the amount of solid material accommodated in the solid material storage unit 151.

For example, referring to **FIG. 13****,** the solid material sensor 156 may be disposed on a lower surface of the solid material storage unit 151. In this case, the solid material sensor 156 may be a weight sensor that senses a weight applied to the solid material storage unit 151. The solid material sensor 156 may sense information of the weight of the solid material loaded in the solid material storage unit 151 and transmit it to the controller 160.

Alternatively, the solid material sensor 156 may be a level sensor that is provided at a predetermined position of the solid material storage unit 151 and configured to sense whether or not the predetermined position is currently covered with the solid material. As shown in **FIG. 13****,** the point at which the solid material sensor 156 is located corresponds to a point of a specific height of the solid material storage unit 151, and the solid material sensor 156 may determine whether or not the point is covered with the solid material by sensing the amount of light or receiving an infrared signal. The level sensor may be provided on another inner surface forming the solid material storage unit 151.

As another example, referring to **FIG. 14****,** a solid material sensor 156' may be a level sensor that senses the height of solid material accommodated in the solid material storage unit 151. In this case, the solid material sensor 156' may be disposed on an inner surface of the storage unit cover 152 and configured to downwardly transmit and receive an optical signal, for example, an infrared signal. The solid material sensor 156' may sense the time difference between the transmission and reception of the optical signal, and the height of the solid material accommodated in the solid material storage unit 151 may be calculated based on the time difference.

Based on the results sensed by the solid material sensors 156 and 156', the controller 160 may determine whether or not there is a shortage of solid material and generate a solid material-shortage signal. The solid material-shortage signal may be generated when a value sensed by the weight sensor is smaller than a predetermined value, when the level sensor senses that it is not covered with solid material, or when the time difference value sensed by the level sensor is greater than a predetermined value (when the calculated height of solid material is smaller than a predetermined value).

A shortage of solid material may also be sensed by the load cell unit 170 of the present disclosure. For example, the load cell unit 170 may sense a weight applied at the start and end of the operation of the solid material feeder 155. The controller 160 may receive a result sensed by the load cell unit 170 and calculate the amount of change in weight between the start and the end of the operation of the solid material feeder 155. When the amount of change in weight is equal to or smaller than a predetermined value, the controller 160 may determine that the solid material is insufficiently supplied from the solid material feeder 155 to the defecation space 121 and generate a solid material-shortage signal.

The solid material-shortage signal generated by the controller 160 may be transmitted to the output unit 163 or the communication unit 165 included in the pet litter box 100 according to the present disclosure, and, thus, the user can be informed of a shortage of the solid material. As shown in **FIG.** 2, the output unit 163 may be disposed on an upper surface or a front surface of the case 110 to display the state of the pet litter box 100 according to the present disclosure, and may visually or audibly output a signal indicating a shortage of the solid material.

Alternatively, as shown in **FIG. 9****,** the communication unit 165 may transmit a solid material-shortage signal to the server or the user device. The user can check a signal indicating that the solid material is insufficient in the pet litter box 100 according to the present disclosure through an application installed on the user device.

In the pet litter box 100 according to the present disclosure, a solid material-shortage signal is generated by the solid material storage unit 151 or the load cell unit 170, and, thus, it is possible to precisely and accurately figure out whether or not there is a shortage of solid material in the pet litter box 100.

Referring to **FIG. 15****,** the solid material-shortage signal generated by the controller 160 of the present disclosure may include a first shortage signal and a second shortage signal. The first shortage signal may be generated based on a result sensed by the solid material sensor 156, and the second shortage signal may be generated based on a result sensed by the load cell unit 170. That is, the first shortage signal indicating a shortage in the amount of solid material accommodated in the solid material storage unit 151 and the second shortage signal indicating a shortage in the amount of solid material in the defecation space 121 may be generated separately.

Since the solid material-shortage signal is subdivided into the first shortage signal and the second shortage signal different from each other, the user can easily maintain and manage the pet litter box 100 according to the present disclosure.

For example, when the user recognizes the first shortage signal, the user may complete a response by replenishing the solid material storage unit 151 with a relatively small amount of solid material. When the user recognizes the second shortage signal, the user may complete a response by replenishing the solid material storage unit 151 with a relatively large amount of solid material and confirming that the defecation space 121 is filled with the solid material to an appropriate level by the operation of the solid material feeder 155.

Further, the user can figure out the required amount of solid material according to the type of the solid material-shortage signal without opening the storage unit cover 152 or directly looking into the pad unit 120. Furthermore, the user can determine whether to respond to the first shortage signal immediately or wait for the second shortage signal and respond to it.

**The** solid material-shortage signal generated by the controller 160 of the present disclosure may further include an abnormal signal. The abnormal signal may be generated when the first shortage signal is not generated and the second shortage signal is generated. When a shortage of solid material is not sensed by the solid material sensor 156 (the first shortage signal is not generated) but a shortage of solid material in the defecation space 121 is sensed (the second shortage signal is generated), there is a possibility of malfunction of the solid material feeder 155 of the present disclosure. The generated abnormal signal may be notified to the user through the output unit 163 or the communication unit 165, and the user may check whether or not there is a malfunction of the solid material feeder 155 and deal with the situation.

Meanwhile, referring to **FIG. 3****,** the entry/exit sensor 180 in the present disclosure senses entry and exit of the pet and generates entry/exit information, and may be provided on the in/out opening io side of the case 110.

The entry/exit sensor 180 according to an embodiment of the present disclosure may be provided as an infrared sensor, but is not necessarily limited thereto, and may be of any type as long as it is capable of sensing entry and exit of the pet and generating entry/exit information.

The entry/exit information generated by the entry/exit sensor 180 may be transmitted to the controller 160 and may be used in the controller 160 to control the sweeper motor 142b.

The reader unit 190 is provided as an RFID reader. Referring to **FIG. 3****,** the reader unit 190 is provided on the in/out opening io side of the case 110 to receive information of a tag attached to the pet at the time of entry or exit of the pet.

Based on the tag information, information such as entry/exit information, the weight of excreta, the number of times of defecation and defecation time may be generated for each tag, and the information may be transmitted to the user through a dedicated application installed on the user device.

When several pets are kept, it is possible to distinguish the types of pets entering and exiting from the pet litter box by the reader unit 190. Therefore, it is possible to effectively monitor the defecation situation for each type of pet.

According to an embodiment of the present disclosure, the controller 160 may control driving of the collection unit 140, *i.e.*, the sweeper motor 142b, based on the weight information transmitted from the load cell unit 170 and the entry/exit information transmitted from the entry/exit sensor 180 to be described later.

**FIG. 16** is a diagram explaining a scoop operation of the collection unit shown in FIG. 2, and FIG. 17 is a diagram explaining an arrange operation of the collection unit shown in **FIG. 2****.**

A scoop operation of the sweeper 141 of the collection unit 140 according to an embodiment of the present disclosure may include a forward movement in a direction from a first position P1 toward a second position P2 and a reverse movement in a direction from the second position P2 toward the first position P1.

Here, the first position P1 and the second position P2 may be any one point and another point above the pad unit 120, and the first position P1 may be farther from the collection container 130 or the in/out opening io than the second position P2. As shown in **FIG. 16****,** the sweeper 141 at the first position P1 is located at the rear of the defecation space 121 and thus may not be a hindrance for the pet to pass through the in/out opening io and enter the defecation space 121. The sweeper 141 that is moved from the first position P1 to the second position P2 may push excreta into the collection space 131 located in front of the defecation space 121.

In an embodiment of the present disclosure, during the scoop operation, the sweeper 141 may perform a forward movement toward the front and a reverse movement toward the rear. That is, during the scoop operation in which the sweeper 141 is moved from the first position P1 to the second position P2 different from the first position P1, the reverse movement from the second position P2 toward the first position P1 may be performed at least once.

The scoop operation of the sweeper 141 according to an embodiment of the present disclosure may suppress the solid material not to be swept toward the collection space 131 in a process of sweeping excreta accumulated in the defecation space 121 into the collection space 131 and thus suppress waste of the solid material. Therefore, the solid material used in the defecation space 121 can be saved and the solid material can be evenly accumulated in the defecation space 121 between the first position P1 and the second position P2.

More specifically, when performing a reverse movement, the sweeper 141 may move from a third position P3 to a fourth position P4 between the first position P1 and the second position P2. Also, according to an embodiment of the present disclosure, the sweeper 141 may perform the forward movement at least twice during the scoop operation and may perform the reverse movement at least once between the forward movements. As such, the reverse movement is added during the forward movement, and, thus, the solid material which is swept by the sweeper 141 during the forward movement may slip through the rake of the sweeper 141 during the reverse movement and may be highly likely to remain inside the defecation space 121.

Further, each position of the sweeper 141 will be described in more detail. The sweeper 141 at the second position may be located above the first position P1. The sweeper 141 at the third position P3 may be located above the fourth position P4. That is, the sweeper 141 moves from the upper side to the lower side during the reverse movement, and, thus, the solid material may slip through the rake of the sweeper 141 more effectively with the help of gravity. Therefore, it is possible to further reduce the amount of solid material wasted.

Furthermore, referring to the embodiment illustrated in FIG. 6, each rake body 241a has a front surface 241c facing the positive direction F and a rear surface 241d facing a reverse direction R. Here, the front surface 241c may be formed to have a relatively gentle curved surface (a large radius of curvature) and the rear surface 241d may be formed to have a relatively sharp curved surface (a small radius of curvature). In this shape, the front surface 241c may suppress excreta not to slip through between the rake bodies 241a when moving in the positive direction F. Also, the rear surface 241d may allow the solid material (sand) to smoothly slip through between the rake bodies 241a and suppress movement of the solid material (sand) when moving in the reverse direction R.

According to an embodiment of the present disclosure, the scoop operation may vary depending on the type of solid material. Specifically, the number of times of the reverse movement of the sweeper 141 may be determined based on the type or density of solid material supplied into the defecation space 121. Cat solid material may include, for example, one or more of bentonite, tofu sand, pellets and silica gel, and bentonite most similar to common sand is one of the widely used cat sand and has relatively small grains.

For example, when bentonite sand is used, the scoop operation is performed from the first position P1 -> the third position P3 → the fourth position P4 → the second position P2. For another example, when the other types of sand are used, the scoop operation is performed from the first position P1 → the third position P3 → the fourth position P4 → the third position P3 → the fourth position P4 → the second position P2. The scoop operation may be modified in part depending on the characteristics of each cat sand, and as the density of cat sand decreases, the reverse movement may be repeated several times. That is, the reverse movement of the sweeper 141 may be performed more times as the density of the solid material supplied into the defecation space 121 decreases.

According to an embodiment of the present disclosure, the scoop operation may be performed by the controller 160, and the controller 160 may locate the collection unit 140 at the first position P1 when the pet enters through the in/out opening io from the outside based on the weight information and the entry/exit information. Thereafter, when the pet defecates, the controller 160 may sense that the pet has exited from the case 110 through the in/out opening io based on the weight information and the entry/exit information and may rotate and move the collection unit 140 to the second position P2 to discharge the excreta to the collection space 131. Then, the controller 160 may perform a return operation of moving the collection unit 140 to the first position P1 and supply solid material into the defecation space 121.

More specifically, as the sweeper motor 142b included in the collection unit 140 rotates, the protruding unit 144 of the collection unit 140 pushes up the cover protrusion 132a of the collection container cover 132 while the collection unit 140 moves closer to the second position P2. Thus, the collection container cover 132 may be opened upwards. Since the collection container cover 132 is opened, the excreta swept by the sweeper 141 may be moved from the defecation space 121 to the collection space 131 and accommodated in the collection space 131. When the collection unit 140 is rotated and moved to the second position P2, the collection container cover 132 may be opened to allow the collection space 131 to communicate with the defecation space 121.

Meanwhile, the return operation of the sweeper 141 is composed of a reverse movement in a direction from the second position P2 to the first position P1. Also, an arrange operation may be performed after the return operation.

An arrange operation of the sweeper 141 is an operation in which the solid material accumulated in a space at the rear of (behind) the first position P1 in the return operation of the sweeper 141 after the scoop operation are made even in the defecation space 121. The sweeper 141 may return back to the first position P1 after performing each of the forward movement and the reverse movement at least once at the first position P1.

More specifically, the sweeper 141 performs the forward movement from the first position P1 to a fifth position P5 between the first position P1 and the second position P2 during the arrange operation and then performs the reverse movement from the fifth position P5 to the first position P1. Here, the sweeper 141 at the first position P1 may be located above the fifth position P5.

By the arrange operation of the sweeper 141, the solid material in the defecation space 121 may be evenly distributed. The scoop and return operations may be repeated several times, or after the return operation, a large amount of solid material is collected behind the first position P1 and a relatively small amount of solid material is collected at the second position P2 on the in/out opening io side. Therefore, by performing the arrange operation of the collection unit 140, the solid material collected behind the first position P1 may be moved to the second position P2 and can be evenly distributed in the defecation space 121.

The arrange operation can suppress accumulation of a large amount of solid material behind the first position in the solid material supply unit 150 during the scoop operation and the return operation, and can also induce effective supply of the solid material. Specifically, when solid material is supplied by the solid material supply unit 150, sand accumulated behind the first position P1 is moved to the front (forwards), and, thus, the newly supplied solid material can be evenly distributed in the defecation space 121.

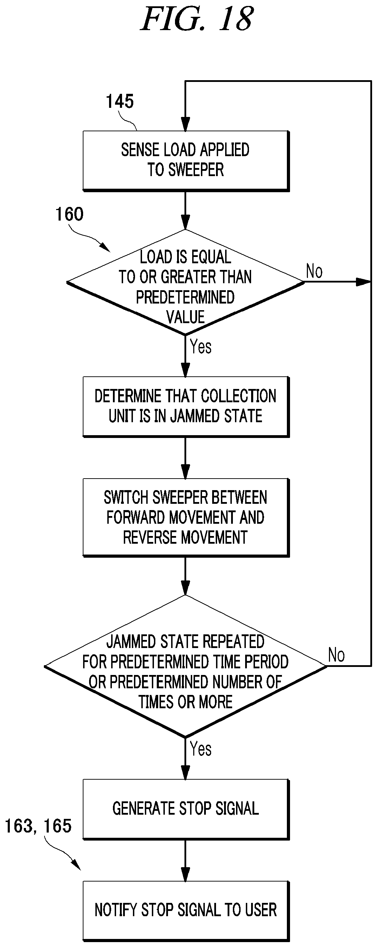

**FIG. 18** is a flowchart explaining a process of sensing and controlling a load applied to a sweeper based on the components shown in **FIG. 9****.** Hereafter, a configuration and function capable of dealing with a situation where a large load, such as hardened solid material, is applied to the sweeper 141 in the scoop operation or the return operation of the present disclosure will be described with further reference to **FIG. 18****.**

Referring to **FIG. 4** and **FIG. 9****,** the collection unit 140 of the present disclosure may further include a rotation sensor 145. The rotation sensor 145 is configured to sense a load applied to the sweeper 141. Further, the controller 160 of the present disclosure may control movement of the sweeper 141 based on the load sensed by the rotation sensor 145.

The rotation sensor 145 may sense a load applied to the driving unit 142 of the collection unit 140. For example, the rotation sensor 145 may sense a load applied to the driving unit 142 by sensing a load (current) applied to the sweeper motor 142b or sensing a rotation angle of the sweeper rotation shaft 142a.

The load applied to the driving unit 142 may be changed as an external force applied to the sweeper 141 is transmitted through the rotating unit 143. While the sweeper 141 moves in the defecation space 121 in which the solid material whose state has not changed are accumulated, a relatively constant load may be applied to the sweeper 141. However, when the sweeper 141 is in contact with excreta of the pet or solid material hardened by moisture from the excreta, the load applied to the sweeper 141 may be increased.

Referring to **FIG. 18****,** when the load applied to the sweeper 141 is equal to or greater than a predetermined value, the controller 160 may determine that the collection unit 140 is in a jammed state. Criteria for determining the jammed state may be set in various ways. For example, the criteria for determining the jammed state may be set based on a case where it is no longer possible to move the sweeper 141 with power generated by the driving unit 142, where the amount of rotation of the driving unit 142 or movement of the sweeper 141 is less than a target amount or where there is a risk of malfunction of the collection unit 140.

In order to eliminate the jammed state, when the collection unit 140 is in the jammed state, the controller 160 may switch the sweeper 141 between the forward movement and the reverse movement.

For example, movement of the sweeper 141 of the present disclosure when the jammed state occurs during the forward movement in the scoop operation will be described with reference to **FIG. 16****.**

When it is determined that the sweeper 141 is in the jammed state due to a large load applied to the sweeper 141 at the second position P2 during the forward movement, the controller 160 may switch the sweeper 141 from the forward movement to the reverse movement. Further, the controller 160 may control the sweeper 141 to move for a predetermined time or by a predetermined distance in the reverse direction, for example, to be switched back to the forward movement at the third position P3.

Switching between the forward movement and reverse movement may be performed a plurality of times. That is, reciprocating movement between the second position P2 and the third position P3 may be performed a plurality of times. The number of times of direction switching or reciprocating movement may be determined depending on the size of the load sensed by the rotation sensor 145. That is, the number of times of direction switching or reciprocating movement may be controlled to increase as the sensed load increases.

According to the operation of the sweeper 141 through switching between the forward movement and the reverse movement, the sweeper 141 may repeatedly advance and retreat at or near the point (second position P2) determined as being in the jammed state. Due to the repeated operation of the sweeper 141, the sweeper 141 may apply a force to the excreta or solid material several times. Thus, it is possible to eliminate the jammed state in which the excreta is caught or the solid material is hardened. Accordingly, the pet litter box 100 according to the present disclosure can operate smoothly and malfunction caused by the solid material or excreta can be suppressed.

Further, as shown in **FIG. 18****,** the controller 160 may generate a stop signal when the jammed state continues for a predetermined time or more or occurs a predetermined number of times or more. Further, the stop signal may be transmitted to the communication unit 165 or the output unit 163. Upon receiving the stop signal, the communication unit 165 may transmit a notification to the server or the user device and the output unit 163 may display the stop signal. Accordingly, the user can quickly recognize and deal with a problem in the defecation space 121.

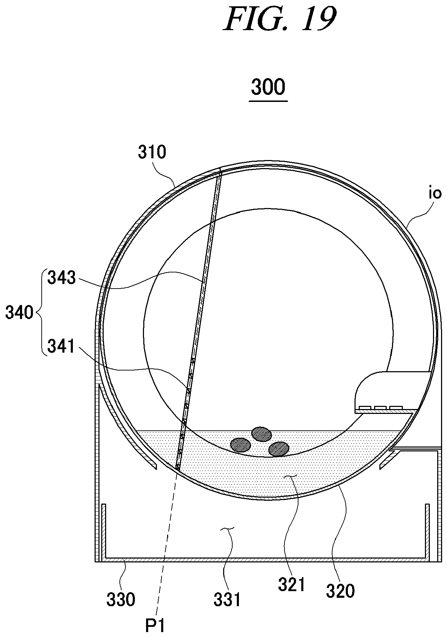

Meanwhile, **FIG. 19** is a diagram showing a pet litter box according to another embodiment of the present disclosure. Hereafter, a pet litter box according to another embodiment of the present disclosure will be described.

A pet litter box 300 according to another embodiment of the present disclosure may include a case 310, a pad unit 320, a collection container 330 and a collection unit 340, as shown in **FIG. 19****.** As the pad unit 320 inside the case 310 rotates, excreta of a pet may be moved from the defecation space 121 to a collection space 331.

The case 310 has an approximately circular shape when viewed from the side. The in/out opening io for the pet to enter and exit may be formed in a front surface of the case 310, and the pad unit 320 forming a defecation space 321 may be formed inside the case 310. The pad unit 320 may be extended from the front to the rear along the circular case 310 except for the in/out opening io. When viewed from the side, the pad unit 320 may have an arc shape of approximately 180° or more and form the defecation space 321 for the pet to defecate toward an inner peripheral surface. The defecation space 321 is configured to accommodate a certain amount of solid material, and the pet entering through the in/out opening io can defecate on the solid material.

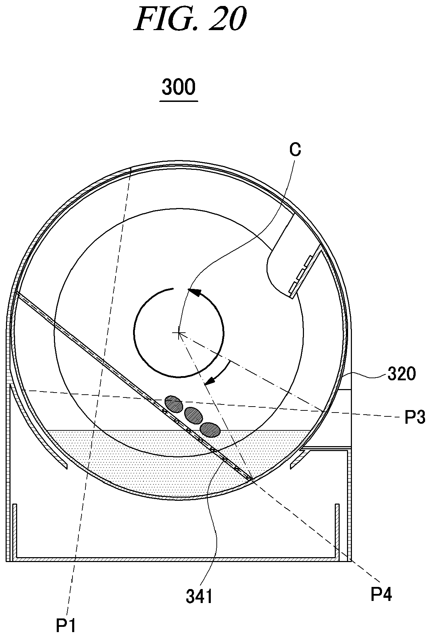

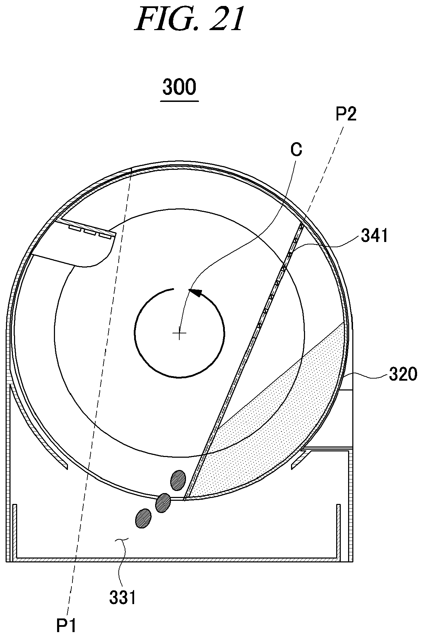

The collection container 330 forming the collection space 331 is disposed under the pad unit 320. In the present embodiment, as the pad unit 320 rotates, the excreta of the pet may be moved from the defecation space 321 to the collection space 331. A scoop operation of the collection unit 340 for treatment of excreta of the pet will be described with reference to **FIG. 20** and **FIG. 21****.**

**FIG. 20** and **FIG. 21** are diagrams explaining a scoop operation of a collection unit according to another embodiment of the present disclosure. The collection unit 340 according to another embodiment of the present disclosure may be equipped with a sweeper 341 that performs a scoop operation from the first position P1 to the second position P2 to move the excreta in the defecation space 321 to the collection space 331 inside the case 310.

The collection unit 340 includes the sweeper 341 and a rotating unit 343 connected to each other, as shown in **FIG. 19****.** In the present embodiment, the rotating unit 343 may be connected to one side of an inner surface of the pad unit 320, and the sweeper 341 may be connected to the other side of the inner surface of the pad unit 320 so as to be adjacent to the defecation space 321. Here, the sweeper 341 may include holes each having a predetermined cross-sectional shape and disposed at predetermined intervals. The solid material in the defecation space 321 may pass through the holes and flow into a space between the collection unit 340 and the pad unit 320, and, thus, sand does not enter the collection space 331 during the scoop operation. Further, the excreta in the defecation space 321 may be moved from the defecation space 321 to the collection space 331 by the collection unit 340.

The collection unit 340 may rotate counterclockwise around a virtual rotation axis C, as shown in **FIG. 20****,** in order to treat the excreta of the pet after the pet defecates. Through movement from the first position P1 to the second position P2 in the scoop operation of the present embodiment, the excreta slides on the surfaces of the sweeper 341 and the rotating unit 343 and falls into the collection space 331, as shown in **FIG. 21****.** Here, the sweeper 341 at the first position P1 may be located lower than the rotating unit 343 and the sweeper 341 at the second position P2 may be located higher than the rotating unit 343.

Here, during the scoop operation, the sweeper 341 of the present embodiment may perform a forward movement from the first position P1 toward the second position P2 (a counterclockwise rotation in the drawing) and a reverse movement from the second position P2 toward the first position P1 (a clockwise rotation in the drawing). As shown in **FIG. 21****,** the excreta of the pet accumulated in the defecation space 321 is moved into the collection space 331 through the in/out opening io by the forward movement of the sweeper 341.

The sweeper 341 may perform the forward movement through the third position P3 and the fourth position P4 by the counterclockwise rotation from the first position P1 toward the second position P2. Here, the sweeper 341 may be located higher at the second position P2 than at the first position P1 based on a contact point between the sweeper 341 and the pad unit 320. Further, the sweeper 341 may be located higher at the third position P3 than at the fourth position P4 based on the contact point between the sweeper 341 and the pad unit 320.

According to another embodiment of the present disclosure, the sweeper 341 may perform the reverse movement at least once between the forward movements during the scoop operation, and the reverse movement of the sweeper 341 may be a clockwise rotation from the third position P3 to the fourth position P4 between the position P1 and the second position P2, as shown in **FIG. 16****.** The sweeper 341 moves from the upper side to the lower side during the reverse movement, and, thus, the solid material may be effectively introduced into a space under the collection unit 340 through the holes of the sweeper 341 with the help of gravity.

In the present embodiment, the reverse movement may suppress the solid material accumulated in the defecation space 321 not to be swept toward the collection space 331 together with the excreta and the solid material may be evenly distributed in the defecation space 321. As described above, the number of times of the reverse movement in the present embodiment may be determined based on the type or density of solid material supplied into the defecation space 321.

The pet litter boxes 100 and 300 according to the present disclosure can automatically remove excreta from the defecation spaces 121 and 321 and automatically supply solid material to the defecation spaces 121 and 321. Also, according to the present disclosure, it is possible to sense whether or not there is a shortage of solid material and possible to suppress in advance malfunction caused by solid material or the like by sensing a jammed state.

The above description of the present disclosure is provided for the purpose of illustration, and it would be understood by a person with ordinary skill in the art that various changes and modifications may be made without changing technical conception and essential features of the present disclosure. Thus, it is clear that the above-described embodiments are illustrative in all aspects and do not limit the present disclosure. For example, each component described as a single type may be implemented in a dispersed form, and likewise components described as distributed may also be implemented in a combined form.

The scope of the present disclosure is defined by the following claims rather than by the detailed description of the embodiment. It shall be understood that all modifications and embodiments conceived from the meaning and scope of the claims and their equivalents are included in the scope of the present disclosure.

## Claims

1. A pet litter box, comprising:
a pad unit configured to form a defecation space;
a load cell unit connected to the pad unit and configured to sense a weight applied to the defecation space;
a solid material supply unit including a solid material storage unit that accommodates therein solid material to be supplied into the defecation space, a solid material feeder configured to discharge the solid material in the solid material storage unit to the defecation space and a solid material sensor configured to sense an amount of the solid material accommodated in the solid material storage unit; and
a controller configured to generate a solid material-shortage signal by determining whether or not there is a shortage of solid material based on results sensed by the solid material sensor and the load cell unit.

2. The pet litter box of Claim 1,
wherein the solid material sensor includes a weight sensor configured to sense a weight applied to the solid material storage unit.

3. The pet litter box of Claim 1,
wherein the solid material sensor includes a level sensor provided at a predetermined position of the solid material storage unit and configured to sense whether or not the predetermined position is covered with the solid material.

4. The pet litter box of Claim 1,
wherein the solid material sensor includes a level sensor configured to sense a height of the solid material accommodated in the solid material storage unit.

5. The pet litter box of Claim 1,
wherein the controller is configured to generate the solid material-shortage signal when an amount of change in weight sensed by the load cell unit between a start and an end of an operation of the solid material feeder is equal to or smaller than a predetermined value.

6. The pet litter box of Claim 1,
wherein the solid material-shortage signal generated by the controller includes:
a first shortage signal generated based on a result sensed by the solid material sensor; and
a second shortage signal generated based on a result sensed by the load cell unit.

7. The pet litter box of Claim 6,
wherein the solid material-shortage signal generated by the controller further includes an abnormal signal generated when the first shortage signal is not generated and the second shortage signal is generated.

8. The pet litter box of Claim 1, further comprising:
a communication unit configured to transmit the solid material-shortage signal from the controller to a server or a device.

9. The pet litter box of Claim 1, further comprising:
an output unit configured to output the solid material-shortage signal from the controller.

10. The pet litter box of Claim 1,
wherein the solid material feeder includes:
a feeder driving unit;
a feeder rotation shaft connected to the feeder driving unit; and
partitions extended from the feeder rotation shaft and disposed to be spaced apart from each other by a predetermined interval along the feeder rotation shaft.

11. The pet litter box of Claim 10,
wherein the controller controls an rotation angle or rotation time of the partitions based on the weight applied to the defecation space.
